# EUROPEAN PATENT SPECIFICATION

(11) **EP 4 303 537 B1**
(45) Date of publication and mention of the grant of the patent: **19.11.2025**
(21) Application number: 22182838.7
(22) Date of filing: 04.07.2022
(51) Int. Cl.: G01C 21/34, G01C 21/00

(54) **IDENTIFYING LOCATIONS CRUCIAL TO AN AUTONOMOUS VEHICLE**
IDENTIFIZIERUNG VON ORTEN, DIE FÜR EIN AUTONOMES FAHRZEUG ENTSCHEIDEND SIND
IDENTIFICATION D'EMPLACEMENTS CRUCIAUX POUR UN VÉHICULE AUTONOME

(43) Date of publication of application: 10.01.2024
(73) Proprietor: Zenseact AB, 417 56 Göteborg (SE)
(72) Inventor: GYLLENHAMMAR, Magnus, 435 43 Pixbo (SE); KHORSAND VAKILZADEH, Majid, 431 66 Mölndal (SE); ALIBEIGI, Mina, 417 65 Göteborg (SE)
(74) Representative: Valea AB

(56) References cited:
- US-A1- 2020 292 338
- US-A1- 2021 241 612
- US-A1- 2022 089 151
- US-A1- 2022 089 153

## Description

### TECHNICAL FIELD

The present disclosure relates to supporting identifying locations crucial to a vehicle equipped with an Automated Driving System, ADS.

### BACKGROUND

Within the automotive field, there has for quite some years been activity in development of autonomous vehicles. An increasing number of modern vehicles have advanced driver-assistance systems, ADAS, to increase vehicle safety and more generally road safety. ADAS - which for instance may be represented by adaptive cruise control, ACC, lane centering, automatic lane changes, semi-automated parking, etc. - are electronic systems that may aid a vehicle driver while driving. Moreover, in a not-too-distant future, Autonomous Driving, AD, will to greater extent find its way into modern vehicles. AD along with ADAS will herein be referred to under the common term Automated Driving System, ADS, corresponding to all different levels of automation, for instance as defined by the SAE J3016 levels (0 - 5) of driving automation. An ADS may be construed as a complex combination of various components that can be defined as systems where perception, decision making, and operation of the vehicle - at least in part - are performed by electronics and machinery instead of a human driver. This may include awareness of surroundings as well as handling of the vehicle. While the automated system has control over the vehicle, it allows the human operator to leave all or at least some responsibilities to the system. For instance, an ADS at level 4 or above - such as defined by SAE J3016 - may offer unsupervised automated driving, which thus may lead to enhanced comfort and convenience by allowing vehicle occupants such as the driver to engage in non-driving related tasks. To perceive its surroundings, an ADS commonly combines a variety of sensors, such as e.g. radar, lidar, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.

Assuring the safety of an ADS is one of the central challenges in being able to release such a system to the market. It is of great importance that an ADS neither exposes its vehicle occupant(s) nor surrounding traffic participants to unacceptable risks. Thus, before release to the market, the ADS software needs to be rigorously tested, which in turn may equate to a lengthy development loop. In order to shorten such a lengthy development loop of the ADS software, it is known to run a candidate ADS software in the background in a production vehicle - or in plural production vehicles such as in a large fleet thereof - and test the performance of the candidate software in an open-loop manner, so-called shadow mode testing. The idea of shadow mode testing enables an accelerated development loop of software for the ADS, in that the candidate software is run in the background in the production vehicle and consumes the data received from the vehicle platform. The performance of the candidate software may then be evaluated with respect to pre-specified metrics; for instance, its output can be evaluated using output from the active software in the vehicle, through self-assessment algorithms, and/or using a potential production ground truth. In case the outcome of a test is unfavorable for the candidate software, detail-rich data may be logged and transferred e.g. to back office for further analysis and/or potential improvement of the software. Favorable test outcomes, on the other hand, may be aggregated for instance as key performance indicators, KPIs, and/or statistics. Shadow mode testing is advantageous in that it alleviates the need to store and transfer huge amounts of raw data e.g. to back office in order to enable similar tests, e.g., Software-In-the-Loop testing, to further evaluate the performance of the candidate software.

However, running candidate software in a production vehicle may increase the need for available onboard computational power, particularly if there exists several candidate software to be evaluated. Although shadow mode testing may be feasible for testing of a single candidate software at a time, it may be greatly inefficient - or even infeasible - if several candidate software are to be continuously evaluated simultaneously. Triggering shadow mode testing of one or several candidate software based on real-time estimation of a criticality level, to avoid continuous evaluation, is not possible, since the candidate software requires an initialization time to process the information and adjust itself to the surrounding environment. Moreover, many of the driving experiences from production vehicles might not necessarily contain useful situations for the development of the new software. That is, commonly, production vehicles drive most of the time through normal operating conditions in which the traffic dynamics do not necessarily expose the ADS - and subsequently the candidate software - to challenging and/or new situations crucial for development and testing of said candidate software. Performing shadow mode testing in such traffic dynamics may thus implicate that there is merely limited contribution to improving the design of the candidate software while computation bandwidth - which could otherwise be used for other purposes - nonetheless is occupied. Although this matter may be alleviated by implementing route planning based on historically encountered crucial locations - e.g. encoded in a so-called challenge heat map - as previously introduced in the European Patent Application No. EP21170064 by the same applicant - and of which the inventors of this application are co-inventors - there is still room for improvement when it comes to in advance identifying potentially crucial locations - for instance in view of ADS software development - for an ADS-equipped vehicle.

US 2021/241612 A1 discloses analyzing observations about a location to correlate the observations into knowledge about the location. The method includes defining a tag for a zone associated with the location according to a pattern within a knowledge set that includes the knowledge for the zone. The pattern corresponding with a zone attribute of the zone. The method includes distributing a mapping of tags including at least the tag to one or more entities that are to travel through the zone.

### SUMMARY OF THE INVENTION

It is therefore an object of embodiments herein to provide an approach for supporting identifying locations crucial to an ADS-equipped vehicle in an improved and/or alternative manner.

The object above may be achieved by the subject-matter of the independent claims. Preferred embodiments are set out in the dependent claims.

### BRIEF DESCRIPTION OF THE DRAWINGS

The various aspects of the non-limiting embodiments, including particular features and advantages, will be readily understood from the following detailed description and the accompanying drawings, in which:
**Fig. 1** illustrates a schematic view of an exemplifying locations mapping system according to embodiments of the disclosure;
**Fig. 2** is a schematic block diagram illustrating an exemplifying locations mapping system according to embodiments of the disclosure;
**Fig. 3** is a flowchart depicting an exemplifying method performed by a locations mapping system according to embodiments of the disclosure; and
**Fig. 4** illustrates a schematic view of an exemplifying implementation of a locations mapping system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to supporting identifying locations crucial to a vehicle equipped with an ADS, there will be disclosed an approach enabling identifying - in advance - a scaled-up number of locations deemed critical and/or challenging - or potentially critical and/or challenging - to an ADS-equipped vehicle. This in turn may enable for instance accelerated shadow mode testing of ADS software, and/or triggering of warnings in view of such locations, and/or vehicle rerouting to avoid - or encounter - such locations, etc.

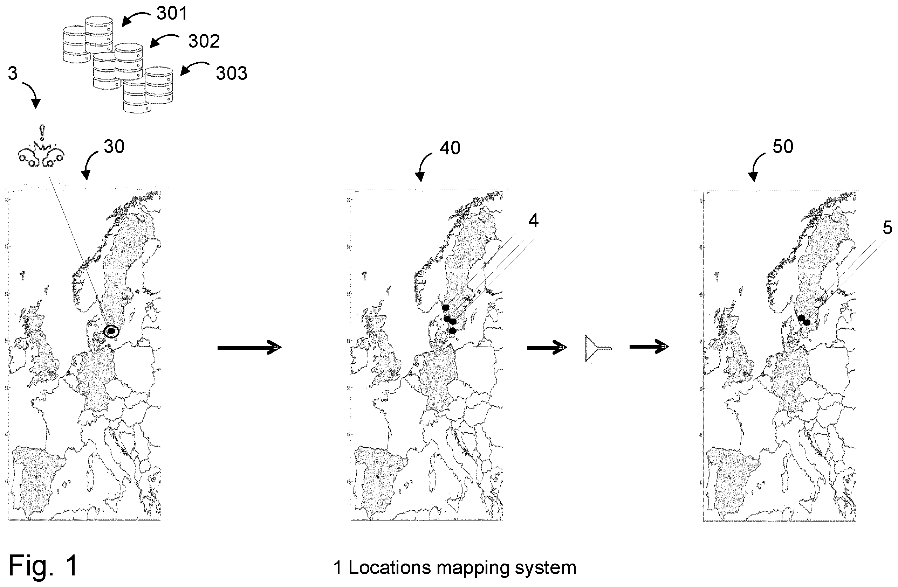

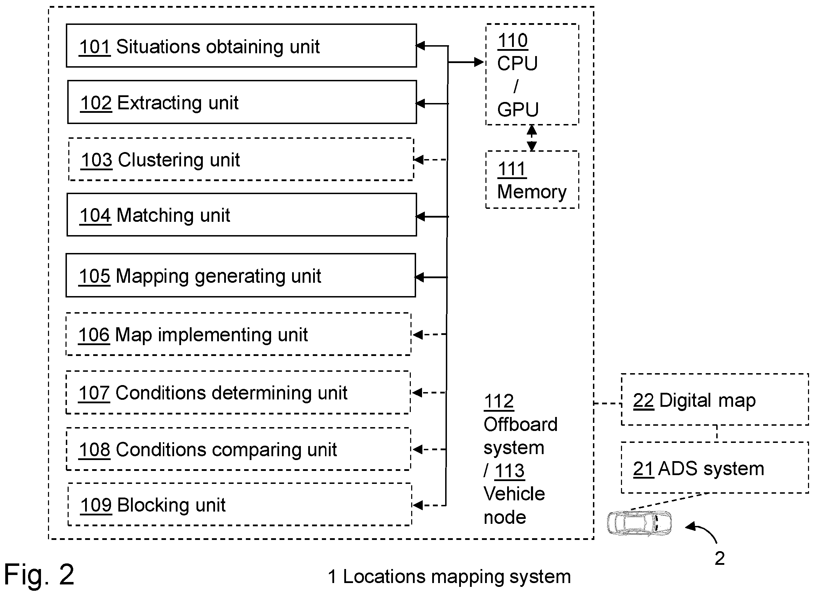

Referring now to the figures, there is depicted in **Fig. 1** a schematic view - and in **Fig. 2** a schematic block diagram - of an exemplifying **locations mapping system 1** according to embodiments of the disclosure. The locations mapping system 1 is adapted for supporting identifying locations crucial to a **vehicle 2** equipped with an **ADS 21.** The ADS-equipped vehicle 2 may be represented by any arbitrary - e.g. known - manned or unmanned vehicle, for instance an engine-propelled or electrically-powered vehicle such as a car, truck, lorry, van, bus and/or tractor. Moreover, the term "vehicle" may according to an example further refer to "production vehicle" and/or "road-driven vehicle". The onboard ADS 21, on the other hand, may be represented by any arbitrary ADAS or AD system e.g. known in the art and/or yet to be developed. Moreover, the vehicle 2 and/or ADS 21 may comprise, be provided with and/or have onboard an optional perception system (not shown) and/or similar system and/or functionality adapted to estimate surroundings of the vehicle 2, and subsequently adapted to estimate world views of the surroundings e.g. with support from a **digital map 22** such as a high definition (HD) map and/or standard definition (SD) map, and/or an equivalent and/or successor thereof, e.g. provided onboard the vehicle 2 and/or on at least a first remotely accessible server. The phrase "locations mapping system" may refer to "locations scale-up system", "locations identifying system", "locations matching system", "similarity identifying system" and/or "ADS supporting system", whereas "method performed by a locations mapping system" may refer to "at least partly computer-implemented method performed by a locations mapping system". Furthermore, "for supporting identifying locations crucial to a vehicle" may refer to "for supporting identifying locations potentially crucial to a vehicle", "for identifying locations crucial to a vehicle", "for supporting identifying locations deemed crucial to a vehicle" and/or "for supporting identifying locations of interest to, useful for and/or relevant for a vehicle", whereas "identifying locations" may refer to "identifying crucial locations". According to an example, "location mapping system" may further refer to "test-optimizing system" and/or "test locations selection system", whereas "for supporting identifying locations crucial to a vehicle" according to an example further may refer to "for supporting shadow mode testing and/or accelerated shadow mode testing of ADS software comprised in a vehicle" and/or "for supporting and/or enabling location-specific, directed, targeted and/or selective shadow mode testing of ADS software comprised in a vehicle". In general, as touched upon in the foregoing, ADS software up for and/or considered for shadow mode testing - referred to as candidate software - may be run in the background in a vehicle - such as a production vehicle - and consume data received from the vehicle platform. Shadow mode testing of ADS software may thus throughout the disclosure refer to running ADS-related software - such as software under development and/or new revision software - in the background in a vehicle and test the performance, features and/or functionality of said software in an open-loop manner, for instance such as further described in the European Patent Application No. EP21170064 by the same applicant - and of which the inventors of this application are co-inventors.

As illustrated in an exemplifying manner in exemplifying Figs. 1-2, the locations mapping system 1 is - e.g. by means of a **situations obtaining unit 101** - adapted and/or configured for obtaining data of **crucial locations 3** of past vehicle situations identified as critical and/or challenging. Thereby, there is extracted and/or derived geo-tagged information relating to previously encountered and/or experienced one or more critical and/or challenging vehicle situations. The past vehicle situations may have occurred at any arbitrary previous points in time, and for instance non-related to the vehicle 2 exemplified herein. Moreover, said past vehicle situations may have been experienced by actual physical vehicles, and/or additionally or alternatively, by software simulations - for instance involving candidate software - in a simulated environment. Furthermore, the crucial locations 3 may be represented by any geographical locations of any arbitrary feasible sizes and/or dimensions - e.g. represented by coordinates, areas, regions and/or road sections - associated with past critical and/or challenging vehicle situations encountered and/or experienced in any feasible - e.g. predeterminable - geographical part(s) of the world. For simplicity, there is in exemplifying Fig. 1 depicted a single crucial location 3. Notably, however, the number of crucial locations 3 may be of any arbitrary magnitude, and for instance range from a single crucial location 3 up to tens, hundreds or even thousands or more thereof. As further illustrated in an exemplifying manner in Fig. 1, the obtaining of data of crucial locations 3 may for instance comprise obtaining - and/or generating or compiling - a **mapping 30**, such as at least a first heat map e.g. referred to as a location-bound heat map, comprising said data, whereupon said mapping 30 may reflect a virtual geographical map to which the crucial locations 3 are mapped, attributed with the crucial locations data.

Moreover, critical and/or challenging vehicle situations may be identified - and/or have been identified - as such, based on selectable - e.g. pre-determinable - crucial location criteria stipulating under what circumstances a location is deemed challenging and/or critical. What is considered crucial locations 3 may accordingly differ with critical and/or challenging situations of interest, which subsequently may be stipulated by said crucial location criteria and/or properties thereof. The crucial location criteria may relate to circumstances of vehicle scenarios, such as type of situation, e.g. type and/or severity of accident, near accident and/or critical event, and/or vehicle performance in relation thereto. Such crucial location criteria may then be utilized for identifying in available data and/or data sources, locations - e.g. referred to as actual locations - associated with previously experienced vehicle scenarios fulfilling such crucial location criteria. The crucial location data may then in turn comprise and/or be represented by geo-tagged information of respective identified crucial location 3, comprising attributes and/or properties relating to respective crucial location's 3 driving-related conditions - such as road conditions, road geometries, scenery, environmental and/or operational conditions - and potentially further relating to respective crucial location's 3 therewith associated past critical and/or challenging vehicle situation(s), such as during said past situation(s) experienced and/or encountered vehicle states, surrounding objects, road conditions, environmental and/or operational conditions etc, for instance comprised in meta-data. Furthermore, the crucial location data may comprise information - e.g. contained in meta-data - indicating to what extent, to what portion(s) and/or sub-system(s) of an ADS 21 - and/or ADS software and/or software version(s) thereof - a crucial location 3 is determined and/or deemed challenging and/or of interest, such as to the whole and/or essentially the whole ADS 21 and/or ADS software, e.g. a perception system (not shown) thereof, a path planning system (not shown) thereof, etc.

Which data source(s) to use for obtaining the data of crucial locations 3 may vary, e.g. with the situation at hand, such as for instance with ADS software - and/or features or functionality thereof - e.g. considered for shadow mode testing. Optionally, and as illustrated in an exemplifying manner in exemplifying Fig. 1, the obtaining of data of crucial locations 3 may comprise obtaining said data - or at least a portion of said data - from - or at least partly from and/or based on - **accidentology data 301** - e.g. pre-stored accidentology data - indicative of past various geo-tagged critical and/or challenging vehicle situations and/or vehicle accidents. Thereby, at least a portion of the crucial locations 3 along with data may be retrieved by consulting one or more data collections and/or storages, such as e.g. commonly known accidentology databases, covering different types of geo-tagged previously experienced critical and/or challenging vehicle scenarios - such as various accidents, near accidents and/or critical events - potentially along with during such scenarios experienced vehicle states, surrounding objects, road conditions, road geometries, scenery, environmental and/or operational conditions etc., e.g. gathered from numerous manually driven and/or ADS-controlled vehicles. Additionally or alternatively, the obtaining of data of crucial locations 3 may comprise obtaining said data - or at least a portion of said data - from - or at least partly from and/or based on - **actual vehicle performance data 302** and/or **simulated vehicle performance data 303** - e.g. pre-stored vehicle performance data 302, 303 - indicative of past various geo-tagged key performance indicators, KPIs, identified as - and/or deemed or considered - critical and/or challenging. Thereby, at least a portion of the crucial locations 3 along with data may be retrieved by consulting - from e.g. production vehicles gathered and/or from candidate software simulation reconstruction scenarios gathered - vehicle performance data covering encountered difficulties relating to ADS-controlled driving scenarios exhibiting - by fulfilling and/or exceeding criteria e.g. relating to break threat number (BTN), time-to-collision (TTC), perceived safety, etc. - vehicle KPIs deemed critical and/or challenging, along with during such scenarios experienced vehicle states, surrounding objects, road conditions, road geometries, scenery, environmental and/or operational conditions etc.

The phrase "obtaining data of crucial locations" may refer to "extracting, deriving, gathering, retrieving, fetching and/or determining data of crucial locations", "obtaining for a predeterminable geographical zone and/or region data of crucial locations" and/or merely "obtaining data of locations". Moreover, "obtaining data of crucial locations" may further refer to "obtaining data pertinent and/or relating to crucial locations" and/or "obtaining information of crucial locations", and according to an example further to "obtaining geo-tagged data of crucial locations" and/or "obtaining driving-related data of crucial locations". Furthermore, "crucial locations" may refer to "crucial locations represented by geographical coordinates, areas, regions and/or road sections", "critical and/or challenging locations" and/or "selected locations", and according to an example further to "candidate locations" and/or "potential test locations". The phrase "crucial locations of past vehicle situations", on the other hand, may refer to "crucial locations of past vehicle scenarios", "crucial locations of former, previous, historical, and/or previously experienced and/or encountered vehicle situations", "crucial locations of one or more past vehicle situations", "crucial locations of past actual and/or simulated vehicle situations", "crucial locations of past vehicle driving situations" and/or "crucial locations pertinent past vehicle situations". Furthermore, "vehicle situations identified as critical and/or challenging" may refer to "vehicle situations deemed, considered, defined and/or determined critical and/or challenging" and/or "vehicle situations identified as crucial", and according to an example further to "vehicle situations identified as critical and/or challenging by fulfilling predeterminable crucial location criteria" and/or "vehicle situations identified as critical and/or challenging by fulfilling predeterminable crucial location criteria stipulating under what circumstances a location is deemed challenging and/or critical". Moreover, according to an example, "vehicle situations identified as critical and/or challenging" may further refer to "vehicle situations identified as critical and/or challenging to an ADS and/or ADS software", "vehicle situations identified as critical and/or challenging in view of shadow mode testing" and/or "vehicle situations identified as critical and/or challenging in view of shadow mode testing of selected candidate software".

As illustrated in an exemplifying manner in exemplifying Figs. 1-2, the locations mapping system 1 is further - e.g. by means of an **extracting unit 102** - adapted and/or configured for extracting from the crucial locations data, for at least a first past vehicle situation, static road features and operating conditions pertaining to the at least first past vehicle situation. Thereby, there is derived from obtained crucial locations data of at least a first previous critical and/or challenging vehicle situation, static road characteristics of the crucial location 3 where the at least first previous vehicle situation occurred - such as e.g. speed limit, type of road, lanes and/or lane marking, etc. - along with quasi-static and/or environmental conditions - such as dynamic elements and/or conditions e.g. traffic congestion situation and/or speed of traffic flow, weather conditions, time of day, road surface conditions, etc. - that prevailed at said crucial location 3 when the at least first previous vehicle situation occurred. In other words, there is retrieved - following assessment of obtained crucial location data - for one or more past vehicle situations identified as critical and/or challenging - static road features **where** these vehicle situation(s) took place, together with features describing the operating conditions **when** said vehicle situation(s) took place.

The - from the crucial locations data extracted - static road features pertaining to the at least first past vehicle situation, may be represented by any feasible fixed - and/or essentially fixed - road characteristics, structures, topologies and/or geometries etc. valid for the location(s) 3 where the corresponding past vehicle situation(s) occurred. The - from the crucial locations data extracted - operating conditions pertaining to the at least first past vehicle situation, on the other hand, may be represented by any feasible situational time-variable quasi-static and/or environmental conditions that prevailed at said location(s) 3 when the corresponding vehicle situation(s) occurred. Moreover, the at least first past vehicle situation may refer to essentially all of the obtained past vehicle situations or any feasible - e.g. predeterminable - one or more obtained previous vehicle situations, which further may be - and/or have been - selected in any feasible manner, e.g. based on any feasible selection criteria, for instance relating to type of past vehicle situation and/or geographical region. Furthermore, extracting the static road features and operating conditions may be accomplished in any feasible manner, such as by assessment of the crucial locations data, for instance utilizing algorithms and/or with support from machine learning. The phrase "extracting from the crucial locations data" may refer to "determining, retrieving and/or deriving from the crucial locations data", "extracting from said data of crucial locations" and/or "extracting from the crucial locations data following evaluation and/or assessment thereof", whereas "for at least a first past vehicle situation" may refer to "for at least a first of said past vehicle situations", "for at least a first of said crucial locations" and/or "for at least a first selected and/or predeterminable past vehicle situation". Moreover, "extracting from the crucial locations data for at least a first past vehicle situation" may refer to "extracting from obtained crucial locations data of at least a first past vehicle situation". The phrase "static road features", on the other hand, may refer to "fixed road features", "location-dependent static road features", "static road features e.g. derived from a map such as a digital map" and/or "static road characteristics, properties, structures, topologies and/or geometries, etc."

Moreover, "operating conditions" may refer to "quasi-static operating conditions", "environmental and/or surrounding operating conditions" and/or "dynamic conditions and/or elements", whereas "pertaining to the at least first past vehicle situation" throughout may refer to "valid for, related to, applicable for and/or of the at least first past vehicle situation".

As illustrated in an exemplifying manner in exemplifying Figs. 1-2, the locations mapping system 1 is further - e.g. by means of a **matching unit 104** - adapted and/or configured for identifying **road segments 4**, e.g. of an ADS-compliant digital map, exhibiting road features to a predeterminable extent matching the static road features pertaining to the at least first past vehicle situation. Thereby, there is found stretches of road 4 - such as of, in and/or derived from an HD and/or SD map - having road characteristics resembling static road characteristics of one or more of the obtained crucial location(s) 3. Accordingly, there is identified road sections 4 - which may be referred to as so-called derived locations - having one or more static road features - such as e.g. speed limit, type of road, lanes and/or lane marking, curvature and/or banking, etc. - similar to those pertaining to the crucial location(s) 3 of the extracted past vehicle situation(s), located at geographical locations other than said crucial location(s) 3.

The road segment(s) 4 may for instance be identified in any feasible one or more digital maps, such as in an ADS-compliant, ADS-intended and/or ADS-supporting digital map, and further for instance offboard the vehicle 2. Moreover, the identified road segments 4 may be represented by any applicable stretches of road of any arbitrary feasible sizes and/or dimensions, located in any feasible geographical part(s) of the world. The number of identified road segments 4 may further be of any arbitrary magnitude, and for instance range from a single road segment 4 up to tens, hundreds or even thousands or more thereof. For simplicity, there is in exemplifying Fig. 1 depicted three identified road segments 4. The extent to which road features of a road segment are required to resemble the extracted static road features pertaining to the at least first past vehicle situation, in order to be considered matching, may be defined in any feasible manner. For instance, road features of a road segment may be required to fulfil predeterminable matching criteria, such as for instance a predeterminable number of features - e.g. selected and/or prioritized features - matching or essentially matching the corresponding extracted static road features, e.g. to a predeterminable level and/or degree of matching and/or similarity, e.g. stated in percentage, such as e.g to at least 75%, 85% or 95%. The phrase "identifying road segments" may refer to "finding, extracting and/or determining road segments", "identifying road scenarios", "identifying stretches of road(s) and/or road sections" and/or "identifying locations and/or geographical locations", and according to an example further to "identifying road segments in, associated with and/or of an ADS-compliant, ADS-intended and/or ADS-supporting digital map " and/or "identifying road segments for a predeterminable geographical area". Moreover, "road segments exhibiting road features" may refer to "road segments having, comprising and/or attributed with road features", "road segments exhibiting road characteristics, properties, structures, topologies and/or geometries, etc.", and/or "road segments exhibiting static road features", whereas "to a predeterminable extent matching" may refer to "to a predeterminable degree and/or level matching", "fulfilling predeterminable criteria stipulating conditions for when road features of a road segment are deemed matching" and/or "to a predeterminable extent resembling".

Furthermore, the road segment(s) 4 exhibiting road features to a predeterminable extent matching the static road features of the at least first past vehicle situation - such as e.g. speed limit, type of road, lanes and/or lane marking, curvature and/or banking, etc. - may be identified in any feasible manner, such as through comparison of one or more of the extracted static road features of the crucial location(s) 3, with one or more road features of roads and/or decomposed roads located in any feasible and/or predeterminable geographical part of the world. Such identifying may for instance be accomplished utilizing algorithms, and/or with support from machine learning. Optionally, prior to identifying road segments 4, the locations mapping system 1 may - e.g. by means of an optional **clustering unit 103** - be adapted and/or configured for classifying road segments, e.g. of an ADS-compliant digital map, into a set of clusters, respective cluster comprising road segments exhibiting road features to a predeterminable extent being similar. Identifying road segments 4 may then comprise - and/or the matching unit 104 may then be adapted and/or configured for - identifying a cluster, out of the set of clusters, comprising road segments 4 exhibiting road features to a predeterminable extent matching the static road features pertaining to the at least first past vehicle situation. Thereby, prior to identifying road segments 4, any feasible number of roads - of any feasible predeterminable geographical region - may be assessed and decomposed to classify road segments thereof having road features - e.g. static road features - to a predeterminable degree and/or level being equivalent, into respective features-dependent groupings - such as in at least a first database and/or in said digital map(s) - where respective grouping comprises road segments 4 of equivalent or essentially equivalent road features. The grouping i.e. cluster comprising road segments 4 with road features resembling - e.g. to greatest extent and/or best resembling - the static road features of the past vehicle situation(s), may then be found. The optional set of clusters may comprise any feasible number of clusters, for instance ranging from merely a few clusters up to tens, hundreds or thousands or even more, and respective number of road segments comprised in any given cluster similarly be of any feasible magnitude with road segments thereof located in any feasible - e.g. predeterminable - geographical part of the world. Moreover, the extent to which road features of differing road segments are required to be similar, in order to be classified into the same cluster, may be defined in any feasible manner. For instance, road features of different road segments may be required to fulfil predeterminable similarity criteria, such as for instance a predeterminable number of features - e.g. selected and/or prioritized features - being equivalent or being essentially equivalent, e.g. to a predeterminable level and/or degree, e.g. stated in percentage, such as e.g. to at least 75%, 85% or 95%. In a similar manner, the extent to which the road features of a certain cluster are required to resemble the extracted static road features pertaining to the at least first past vehicle situation, in order to be considered a - and/or the - matching cluster, may be defined in any feasible manner. For instance, road features of a cluster may be required to - in comparison to road features of other clusters - best and/or to the greatest extent match the corresponding extracted static road features. Additionally or alternatively, road features of a cluster may for instance be required to fulfil predeterminable cluster matching criteria, such as for instance a predeterminable number of features - e.g. selected and/or prioritized features - of said cluster matching or essentially matching the corresponding extracted static road features, e.g. to a predeterminable level and/or degree, e.g. stated in percentage, such as e.g. to at least 75%, 85% or 95%. The phrase "classifying road segments" may refer to "clustering, structuring, grouping and/or grouping together road segments", and according to an example further to "classifying road segments in and/or of an ADS-compliant, ADS-intended and/or ADS-supporting digital map" and/or "classifying road segments for a predeterminable geographical area". "Into a set of clusters", on the other hand, may refer to "into a set of differing clusters", "into clusters" and/or "into a set of groupings". Moreover, "road segments exhibiting road features" may refer to "road segments having, comprising and/or attributed with road features", "road segments exhibiting road characteristics, properties, structures, topologies and/or geometries, etc.", and/or "road segments exhibiting static road features", whereas "to a predeterminable extent being similar" may refer to "to a predeterminable degree and/or level being similar", "fulfilling predeterminable criteria stipulating conditions for when road features of differing road segments are deemed similar" and/or "to a predeterminable extent being equivalent". The phrase "to a predeterminable extent matching", on the other hand, may in this context refer to "to a predeterminable degree and/or level matching", "fulfilling predeterminable criteria stipulating conditions for when road features of a road segment are deemed matching" and/or "to a predeterminable extent resembling", and according to an example further to "best and/or to greatest extent matching".

As illustrated in an exemplifying manner in exemplifying Figs. 1-2, the locations mapping system 1 is further - e.g. by means of a **mapping generating unit 105** - adapted and/or configured for generating a **mapping 40** associating the identified road segments 4 with the extracted operating conditions. Thereby, there is compiled and/or created a locations scaled-up mapping 40 - such as a heat map - which connects - e.g. attributes - the operating conditions pertaining to the at least first past vehicle situation, to the road segments 4 identified to exhibit road features resembling the static road features pertaining to said at least first past vehicle situation. Accordingly, rather than in the mapping 40 including e.g. merely the exact location(s) 3 where past vehicle situation(s) identified as critical and/or challenging have previously occurred, there is included - attributed with the corresponding relevant extracted operational conditions prevailing when said past vehicle situation(s) occurred - road segments 4 i.e. locations, identified as being statically similar to where the past vehicle situation(s) occurred. In other words, one or more past critical and/or challenging situations may be mapped not only to its/their exact geographical location(s) 3, but additionally mapped to road segments 4 resembling similar road features.Thus, with the introduced concept, there is provided a scaled-up mapping 40, e.g. heat map, pointing out locations 4 - located elsewhere as compared to the crucial location(s) 3 of the past vehicle situation(s) - which at least in view of static road features are similar to said crucial location(s) 3, and which subsequently potentially may represent challenging and/or critical situation(s) similar to that/those of the past vehicle situation(s). Subsequently, with the scaled-up mapping 40, there may be enabled for instance accelerated shadow mode testing of ADS software, and/or triggering of warnings upon approaching road segments 4 of said mapping 40, and/or rerouting of the vehicle 2 to avoid - or encounter - such road segments 4, etc.

The scaled-up mapping 40 - which may cover any feasible geographical part of the world - may comprise any feasible number of identified road sections 4 - for instance range from a single road section 4 up to tens, hundreds or thousands or even more thereof - and further pertain to any feasible number of past vehicle scenarios, such as - as depicted in an exemplifying manner in Fig. 1 - to a single past vehicle situation, or range up to tens, hundreds or thousands or even more thereof. Said mapping 40 may further take on any feasible format, e.g. digital format, for instance as touched upon in the foregoing - and as illustrated in exemplifying Fig. 1 - be represented by and/or comprising a heat map. That is, optionally, generating a mapping 40 may comprise - and/or the mapping generating unit 105 may be adapted and/or configured for - generating a heat map 40 in which the identified road segments 4 are attributed with the extracted operating conditions. Thereby, the heat map 40 - which for instance may be referred to as a scaled-up heat map 40 and which further may be represented by at least a first heat map - may reflect a virtual geographical map to which the identified road segments 4 are mapped, respectively attributed with - at least - the extracted operating conditions prevailing when the corresponding past vehicle situation took place. Should road segments optionally - as described above - have been classified into a set of clusters, from which there is identified a cluster comprising road segments 4 exhibiting road features to a predeterminable extent matching the static road features pertaining to the at least firs past vehicle situation, then generating a mapping 40 may comprise - and/or the mapping generating unit 105 may be adapted and/or configured for - generating a mapping 40 associating the identified cluster with the extracted operating conditions. Thereby, there is compiled and/or created a mapping 40 - such as a heat map - which connects - e.g. attributes - the operating conditions pertaining to the at least first past vehicle situation, to the road segments 4 of the cluster identified to comprise road segments 4 exhibiting road features resembling - e.g. best and/or to greatest extent resembling - the static road features pertaining to said at least first past vehicle situation. The phrase "generating a mapping" may refer to "compiling, creating and/or constructing a mapping", "generating a digital mapping", "generating a scaled-up mapping", "generating a locations scaled-up mapping" and/or "generating a connection and/or association", and according to an example further to "generating a heat map, for instance referred to as a scaled-up heat map, locations scaled-up heat map and/or base heat map". Moreover, "a mapping associating the identified road segments with said operating conditions" may refer to "a mapping attributing, attaching, connecting, combining and/or mapping the identified road segments with said operating conditions" and/or "a mapping associating the identified road segments with the operating conditions pertaining to the at least first past vehicle situation". In a similar manner, "a mapping associating the identified cluster with said operating conditions" may refer to "a mapping associating the road segments of the identified cluster with said operating conditions", "a mapping attributing, attaching, connecting, combining and/or mapping the identified cluster and/or road segments thereof with said operating conditions" and/or "a mapping associating the identified cluster and/or road segments thereof with the operating conditions pertaining to the at least first past vehicle situation".

Optionally, and as illustrated in an exemplifying manner in exemplifying Figs. 1-2, the locations mapping system 1 may further - e.g. by means of an optional map **implementing unit 106** - be adapted and/or configured for implementing the mapping 40 in a digital map 22 accessible from the vehicle 2. Thereby, the generated mapping 40 - e.g. heat map - may be utilized in the vehicle 2, for instance in real-time. Subsequently, the mapping 40 may provide input and/or form basis in view of for instance planning of shadow mode testing of ADS software onboard the vehicle 2, and/or triggering of warnings upon the vehicle 2 approaching road segments 4 of the mapping 40, and/or rerouting of the vehicle 2 to avoid - or encounter - such road segments 4, etc. The mapping 40 may be implemented in the digital map 22 in any feasible manner, such as for instance embedded in a layer thereof. Moreover, the digital map 22 may - as previously touched upon - be represented by any feasible at least first digital map 22, such as e.g. an HD map or SD map, or an equivalent or successor thereof, and further for instance be provided onboard the vehicle 2 and/or in at least a first remotely accessible server. The phrase "implementing said mapping in a digital map accessible from said vehicle" may thus refer to "embedding and/or incorporating said mapping in a digital map accessible from said vehicle" and/or "implementing said mapping in a digital map accessible by said vehicle", and according to an example further "implementing said mapping in a layer of a digital map accessible from said vehicle" and/or to "implementing said mapping in a digital map onboard said vehicle".

Furthermore, optionally, and as illustrated in an exemplifying manner in exemplifying Figs. 1-2, the locations mapping system 1 may further - e.g. by means of an optional **conditions determining unit 107** - be adapted and/or configured for determining current and/or expected quasi-static conditions - and potentially further dynamic conditions - pertaining to respective one or more of the road segments 4 of the mapping 40. The locations mapping system 1 may then further - e.g. by means of an optional **conditions comparing unit 108 -** be adapted and/or configured for comparing for the one or more road segments 4, respective road segment's 4 associated operating conditions with the corresponding determined current and/or expected conditions. Moreover, the locations mapping system 1 may then further - e.g. by means of an optional **blocking unit 109 -** be adapted and/or configured for blocking from the mapping 40, road segments associated with operating conditions to a predeterminable extent not complying with the corresponding determined current and/or expected conditions. Thereby, there may be temporarily blacked out from the locations scaled-up mapping 40, those road segments 4 attributed with operating conditions such as quasi-static conditions - e.g. dynamic elements and/or conditions such as traffic congestion situation and/or speed of traffic flow, weather conditions, time of day, road surface conditions, etc. - non-compliant with newly and/or recently established prevailing and/or expected conditions pertaining to said road segments 4. Applying such real-time filtering may in turn result in and/or render a presently relevant and/or updated **filtered mapping 50** - such as a filtered heat map - comprising **compliant road segments 5** associated with operating conditions to a predeterminable extent complying with the newly and/or recently established prevailing and/or expected conditions pertaining to respective road segment 5, with non-compliant road segments non-included. For instance, should road segment-associated operating conditions pertaining to a past vehicle situation indicate and/or insinuate that said situation occurred during certain weather conditions and/or certain road conditions, then road segments 4 for which there may be derived - from newly and/or recently determined current and/or expected conditions - that no such weather conditions and/or road conditions pertain, may be temporarily discarded. In a similar manner, for instance, should road segment-associated operating conditions pertaining to a past vehicle situation indicate and/or insinuate that said situation occurred during a traffic jam, then road segments 4 for which there may be derived - from newly and/or recently determined current and/or expected conditions - that no congestion pertains, may be temporarily discarded. Accordingly, there is provided a filtered mapping 50 - such as a real-time-filtered mapping - pointing out locations 5 i.e. road segments 5 that in a yet improved manner may represent challenging and/or critical situations similar to those of past vehicle situations, in that respective road segment 5 of the filtered mapping 50 - in addition to having static road features similar to a crucial location 3 of a past vehicle scenario - has an association with operating conditions - which prevailed when the corresponding past vehicle situation occurred - that match current and/or expected conditions newly and/or recently determined for that road segment 5. The filtered mapping 50 - e.g. filtered heat map - which thus is relevant and/or up to date in view of the current situation, may hence provide input and/or form basis in a yet improved manner in view of for instance planning of shadow mode testing of ADS software onboard the vehicle 2, and/or triggering of warnings upon approaching compliant road segments 5 of the filtered mapping 50, and/or rerouting of the vehicle 2 to avoid - or encounter - such compliant road segments 5, etc.

The filtered mapping 50 may take on any feasible format, e.g. digital format, for instance as touched upon in the foregoing - and as illustrated in exemplifying Fig. 1 - be represented by and/or comprising a heat map. Thus, the optional heat map 50 - which for instance may be referred to as filtered or real-time-filtered heat map 50 and which further may be represented by at least a first heat map - may be represented by the previously discussed optional scaled-up heat map 40, with road segments associated with operating conditions to a predeterminable extent not complying with the corresponding determined current and/or expected conditions, temporarily discarded. Blocking of non-complying road segments from the scaled-up mapping 40 may range for any feasible time period, for instance for a predeterminable period of time or until updated current and/or expected quasi-static conditions - and potentially further dynamic conditions - pertaining to respective one or more of the road segments 4 of the mapping 40, are determined. Furthermore, the current and/or expected quasi-static conditions - and potentially further dynamic conditions - pertaining to respective one or more of the road segments 4 of the scaled-up mapping 40, may be determined in any feasible manner, such as with support and/or input from sensors such as surrounding detecting sensors, for instance via inter-vehicle communication, V2V/V2I/V2X communication, swarm service(s), cloud service(s) and/or probe sourcing, etc. Moreover, the quasi-static conditions may be represented by any feasible quasi-stationary features, elements and/or phenomenon, such as environmental and/or surrounding conditions that may vary over time, e.g. weather conditions, time of day, road surface conditions, traffic congestion situation and/or speed of traffic flow, etc. Moreover, the extent to which extracted operating conditions associated with a road segment 4 is required to comply with the corresponding determined current and/or expected conditions, in order to be considered complying, may be defined in any feasible manner. For instance, said operating conditions may be required to fulfil predeterminable compliance criteria, such as for instance a predeterminable number of operating conditions - e.g. selected and/or prioritized operating conditions - matching or essentially matching the corresponding determined current and/or expected conditions, e.g. to a predeterminable level and/or degree, e.g. stated in percentage, such as e.g to at least 75%, 85% or 95%. The phrase "determining current and/or expected quasi-static conditions" may refer to "estimating and/or predicting current and/or expected quasi-static conditions", "determining respective current and/or expected quasi-static conditions" and/or "determining prevailing and/or expected quasi-static conditions", and according to an example further to "determining current and/or expected quasi-static conditions at - and/or within - a predeterminable period of time". Moreover, "quasi-static conditions" may refer to "semi-static conditions" and/or "quasi-static features, elements and/or phenomenon", and according to an example further to "quasi-static environmental and/or surrounding conditions". "Dynamic conditions", on the other hand, may refer to "dynamic environmental and/or surrounding conditions". Furthermore, "comparing for said one or more road segments" may refer to "correlating for said one or more road segments", whereas "blocking from the mapping" may refer to "hiding, discarding, ignoring and/or black out from the mapping" and/or "temporarily and/or for a transient time period blocking from the mapping". Moreover, according to an example, "blocking from the mapping" may refer to "blocking from the mapping to render a filtered mapping, for instance a filtered heat map". Furthermore, according to an example, the phrase "blocking from the mapping, road segments associated with operating conditions to a predeterminable extent not complying" may refer to "deriving from said mapping, a temporary filtered mapping comprising road segments associated with operating conditions to a predeterminable extent complying". "Filtered mapping" may refer to "real-time-filtered or essentially real-time-filtered mapping" and/or "final mapping", and according to an example further to "history-based mapping". In a similar manner, "filtered heat map" may refer to "real-time-filtered or essentially real-time-filtered heat map" and/or "final heat map", and according to an example further to "history-based heat map". Furthermore, "blocking form the mapping road segments" may refer to "blocking from the mapping road segments out of the one or more road segments", whereas "road segments associated with operating conditions" may refer to "road segments associated with operating conditions pertaining to the at least first past vehicle situation". The phrase "operating conditions to a predeterminable extent not complying with the corresponding determined current and/or expected conditions", on the other hand, may refer to "operating conditions to a predeterminable level and/or degree not complying with the corresponding determined current and/or expected conditions", "operating conditions to a predeterminable extent non-compliant with, not matching and/or not being applicable in view of the corresponding determined current and/or expected conditions" and/or "operating conditions not fulfilling predeterminable criteria stipulating conditions and/or circumstance for when associated operating conditions fails to comply with the corresponding determined current and/or expected conditions".

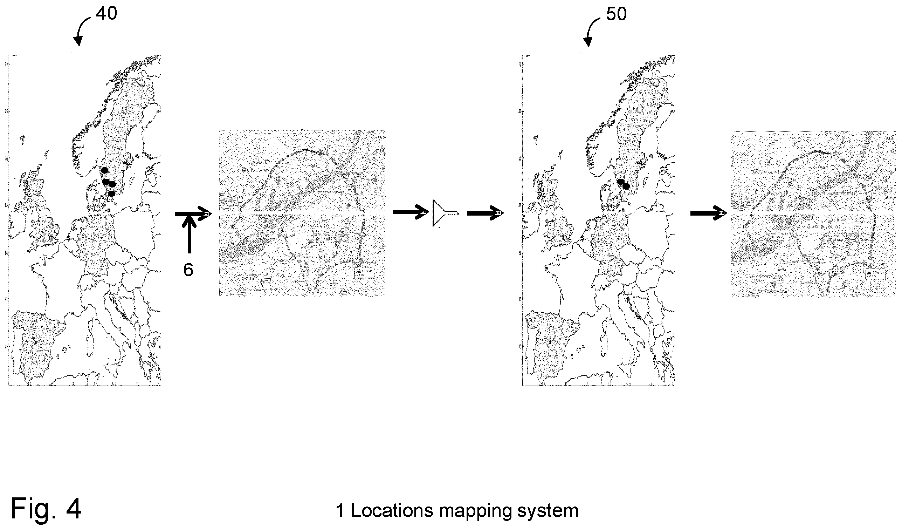

The concept introduced herein, i.e. the scaled-up mapping 40 - for instance represented by a locations scaled-up heat map - and potentially further the filtered mapping 50 - for instance represented by a real-time filtered heat map - may thus, as touched upon in the foregoing, for instance be utilized upon - and/or constitute a so-called challenge heat map when - performing route planning in view of crucial locations, such as in view of e.g. shadow mode testing of ADS-software onboard a vehicle. According to an example, and as depicted in an exemplifying manner in conjunction with Fig. 4, an implementation and/or embodiment of the concept introduced herein may thus potentially be carried out as follows. In the given example, it is provided that the scaled-up mapping 40 is implemented in a digital map 22 accessible from the vehicle 2. According to the example, there is retrieved - e.g. by means of an optional route retrieving unit (not shown) of the locations mapping system 1 - one or more **potential vehicle routes 6** of the vehicle 2. Thereby, there is derived one or more viable routes 6 - or so-called candidate routes - between two geographical locations, such as between an origin and a destination, relevant and/or applicable for the vehicle 2 to potentially travel. The geographical locations - such as the origin and destination - between which the one or more potential vehicle routes 6 stretches, may be and/or have been selected in any arbitrary feasible manner, such as by an operator - e.g. occupant - of the vehicle 2 and/or by e.g. the ADS 21, such as by a route planning module thereof. Further, retrieving the one or more potential vehicle routes 6 may be accomplished in any arbitrary feasible - e.g. known - manner, such as from and/or with support from one or more of e.g. a navigation system (not shown), route planning system (not shown), the ADS 21, etc. As exemplified in the second left-most sketch of Fig. 4, the retrieved potential vehicle routes 6 may then be overlaid the locations scaled-up mapping 40, to thereby find along respective potential vehicle route 6 road segments having road features resembling static road features of past vehicle situation(s) identified as critical and/or challenging. As further exemplified in the right-most sketch of Fig. 4, real-time filtering may then be applied - such as by applying the filtered mapping 50 - to match the quasi-static - and potentially dynamic - conditions presently faced by the ADS-equipped vehicle 2 along road segments of respective potential vehicle route 6, to thereby temporarily discard - along respective potential vehicle route 6 - road segments associated with operating conditions not complying with the conditions presently faced. Further details relating to route planning based on past crucial vehicle situations - such as based on a generated challenge heat map - may be found in the European Patent Application No. EP21170064 by the same applicant, and of which the inventors of this application are co-inventors, and will for the sake of brevity and conciseness not be further elaborated upon.

As further shown in Fig. 2, the locations mapping system 1 comprises a situations obtaining unit 101, an extracting unit 102, an optional clustering unit 103, a matching unit 104, a mapping generating unit 105, a map implementing unit 106, an optional conditions determining unit 107, an optional conditions comparing unit 108 and an optional blocking unit 109, all of which already have been described in greater detail above. Furthermore, the embodiments herein for supporting identifying locations crucial to an ADS-equipped vehicle 2, may be implemented through one or more processors, such as a **processor 110,** for instance represented by at least a first Central Processing Unit, CPU, at least a first Graphics Processing Unit, GPU, at least a first Tensor Processing Unit, TPU, and/or at least a first Field-Programmable Gate Array, FPGA, together with computer program code for performing the functions and actions of the embodiments herein. Said program code may also be provided as a computer program product, for instance in the form of a data carrier carrying computer program code for performing the embodiments herein when being loaded into the locations mapping system 1. One such carrier may be in the form of a CD/DVD ROM disc and/or a hard drive, it is however feasible with other data carriers. The computer program code may furthermore be provided as pure program code on a server and downloaded to the locations mapping system 1. The locations mapping system 1 may further comprise a **memory 111** comprising one or more memory units. The memory 111 optionally includes high-speed random access memory, such as DRAM, SRAM, DDR RAM, or other random access solid-state memory devices, and further optionally includes non-volatile memory, such as one or more magnetic disk storage devices, optical disk storage devices, flash memory devices, or other non-volatile solid-state storage devices. Moreover, the memory 111 may be arranged to be used to store e.g. information, and further to store data, configurations, scheduling, and applications, to perform the methods herein when being executed in the locations mapping system 1. For instance, the computer program code may be implemented in the firmware, stored in FLASH memory 111, of an embedded processor 110, and/or downloaded wirelessly e.g. from a server. Furthermore, the situations obtaining unit 101, the extracting unit 102, the optional clustering unit 103, the matching unit 104, the mapping generating unit 105, the map implementing unit 106, the optional conditions determining unit 107, the optional conditions comparing unit 108, the optional blocking unit 109, the optional processor 110 and/or the optional memory 111, may at least partly be comprised in one or more **systems 112** offboard the vehicle 2 for instance represented by a backend system and/or centralized system, and/or comprised in one or more **nodes 113** e.g. ECUs of the vehicle 2 e.g. in and/or in association with the ADS 21. It should thus be understood that parts of the described solution potentially may be implemented in a system 112 located external the vehicles 2, or in a combination of internal and external the vehicle 2, such as in a distributed system and/or solution, for instance further in a so-called cloud solution. Those skilled in the art will also appreciate that said units 101-109 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in a memory such as the memory 111, that when executed by the one or more processors such as the processor 110 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip (SoC).

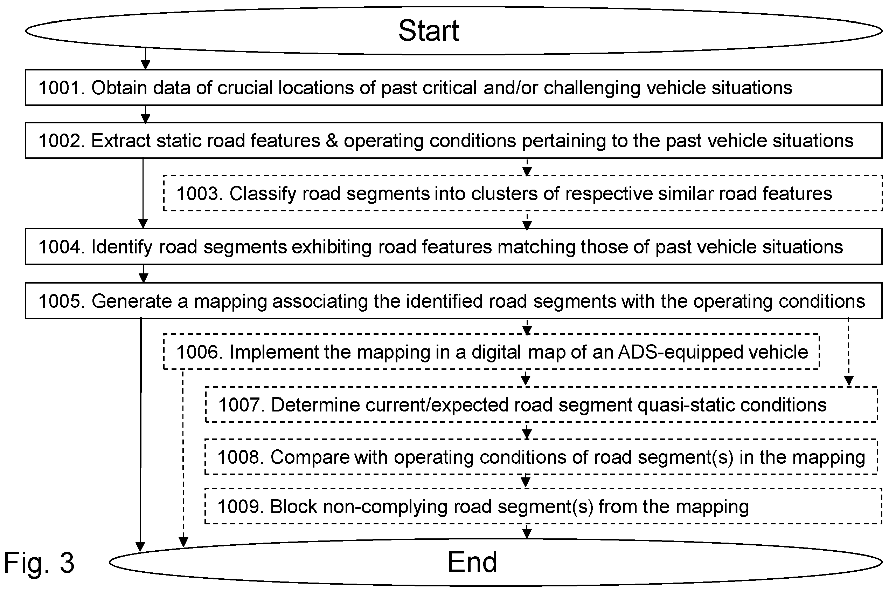

Fig. 3 is a flowchart depicting an exemplifying method performed by a locations mapping system 1 according to embodiments of the disclosure. Said method is for supporting identifying locations crucial to an ADS-equipped vehicle 2. The exemplifying method, which may be continuously repeated, comprises one or more of the following actions discussed with support from Figs. 1, 2 and 4. Moreover, the actions may be taken in any suitable order and/or one or more actions may be performed simultaneously and/or in alternate order where applicable. For instance, Actions 1001/1002 and optional Action 1003 may be performed essentially simultaneously and/or in alternate order.

### Action 1001

In Action 1001, the locations mapping system 1 obtains - e.g. with support from the situations obtaining unit 101 - data of crucial locations 3 of past vehicle situations identified as critical and/or challenging.

Optionally, Action 1001 of obtaining data of crucial locations may comprise - and/or the situations obtaining unit 101 may be adapted and/or configured for - obtaining said data from:
accidentology data (301) indicative of past various geo-tagged critical and/or challenging vehicle situations and/or vehicle accidents; and/or
actual (302) and/or simulated (303) vehicle performance data indicative of past various geo-tagged key performance indicators, KPIs, identified as critical and/or challenging.

### Action 1002

In Action 1002, the locations mapping system 1 extracts - e.g. with support from the extracting unit 102 - from the crucial locations data, for at least a first past vehicle situation, static road features and operating conditions pertaining to the at least first past vehicle situation.

### Action 1003

In optional Action 1003, the locations mapping system 1 may classify - e.g. with support from the optional clustering unit 103 - road segments, e.g. of an ADS-compliant digital map, into a set of clusters, respective cluster comprising road segments exhibiting road features to a predeterminable extent being similar.

### Action 1004

In Action 1004, the locations mapping system 1 identifies - e.g. with support from the matching unit 104 - road segments 4, e.g. of an ADS-compliant digital map, exhibiting road features to a predeterminable extent matching the static road features pertaining to the at least first past vehicle situation.

Optionally, should Action 1004 follow upon optional Action 1003 of classifying road segments into a set of clusters, then Action 1004 may comprise - and/or the matching unit 104 may be adapted and/or configured for - identifying a cluster, out of the set of clusters, comprising road segments 4 exhibiting road features to a predeterminable extent matching the static road features pertaining to the at least first past vehicle situation.

### Action 1005

In Action 1005, the locations mapping system 1 generates - e.g. with support from the mapping generating unit 105 - a mapping 40 associating the identified road segments 4 with said operating conditions.

Optionally, Action 1005 of generating a mapping 40 may comprise - and/or the mapping generating unit 105 may be adapted and/or configured for - generating a heat map in which the identified road segments 4 are attributed with said operating conditions.

Furthermore, optionally, should Action 1005 follow upon optional Action 1003 of classifying road segments into a set of clusters, then Action 1005 may comprise - and/or the mapping generating unit 105 may be adapted and/or configured for - generating a mapping 40 associating the identified cluster with said operating conditions.

### Action 1006

In optional Action 1006, the locations mapping system 1 may implement - e.g. with support from the optional map implementing unit 106 - the mapping 40 in a digital map 22 accessible from the vehicle 2.

### Action 1007

In optional Action 1007, the locations mapping system 1 may determine - e.g. with support from the optional conditions determining unit 107 - current and/or expected quasi-static conditions - and potentially further dynamic conditions - pertaining to respective one or more of the road segments 4 of the mapping 40.

### Action 1008

In optional Action 1008, which may follow upon optional Action 1007, the locations mapping system 1 may compare - e.g. with support from the optional conditions comparing unit 108 - for the one or more road segments 4, respective road segment's associated operating conditions with the corresponding determined current and/or expected conditions.

### Action 1009

In optional Action 1009, which may follow upon optional Action 1008, the locations mapping system 1 may block - e.g. with support from the optional blocking unit 109 - from the mapping 40, road segments associated with operating conditions to a predeterminable extent not complying with the corresponding determined current and/or expected conditions.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a locations mapping system (1) for supporting identifying locations crucial to a vehicle (2) equipped with an Automated Driving System, ADS (21), said method comprising:
***obtaining*** (1001) data of crucial locations (3) of past vehicle situations identified as critical and/or challenging;
***extracting*** (1002) from the crucial locations data, for at least a first past vehicle situation, static road features and operating conditions pertaining to the at least first past vehicle situation;
***identifying*** (1004) road segments (4), e.g. of an ADS-compliant digital map, exhibiting road features to a predeterminable extent matching the static road features pertaining to the at least first past vehicle situation, said road segments (4) being located at geographical locations other than said crucial locations (3); and
***generating*** (1005) a mapping (40) associating the identified road segments (4) located at geographical locations other than said crucial locations (3), with said operating conditions.

2. The method according to claim 1, wherein said ***generating*** (1005) a mapping (40) comprises generating a heat map in which the identified road segments (4) are attributed with said operating conditions.

3. The method according to claim 1 or 2, further comprising:
***implementing*** (1006) said mapping (40) in a digital map (22) accessible from said vehicle (2).

4. The method according to any one of claims 1-3, further comprising:
***determining*** (1007) current and/or expected quasi-static conditions - and potentially further dynamic conditions - pertaining to respective one or more of the road segments (4) of the mapping (40);
***comparing*** (1008) for said one or more road segments (4), respective road segment's (4) associated operating conditions with the corresponding determined current and/or expected conditions, and
***blocking*** (1009) from the mapping (40), road segments associated with operating conditions to a predeterminable extent not complying with the corresponding determined current and/or expected conditions.

5. The method according to any one of claims 1-4, further comprising:
***classifying*** (1003) road segments, e.g. of an ADS-compliant digital map, into a set of clusters, respective cluster comprising road segments exhibiting road features to a predeterminable extent being similar;
said ***identifying*** (1004) road segments (4) then comprising identifying a cluster, out of the set of clusters, comprising road segments (4) exhibiting road features to a predeterminable extent matching the static road features pertaining to the at least first past vehicle situation, and said ***generating*** (1005) a mapping (40) then comprising generating a mapping (40) associating the identified cluster with said operating conditions.

6. The method according to any one of claims 1-5, wherein said ***obtaining*** (1001) data of crucial locations (3), comprises obtaining said data from:
accidentology data (301) indicative of past various geo-tagged critical and/or challenging vehicle situations and/or vehicle accidents; and/or
actual (302) and/or simulated (303) vehicle performance data indicative of past various geo-tagged key performance indicators, KPIs, identified as critical and/or challenging.

7. A **locations mapping system** (1) for supporting identifying locations crucial to a vehicle (2) equipped with an Automated Driving System, ADS (21), said locations mapping system (1) comprising:
a **situations obtaining unit** (101) for ***obtaining*** (1001) data of crucial locations (3) of past vehicle situations identified as critical and/or challenging;
an **extracting unit** (102) for ***extracting*** (1002) from the crucial locations data, for at least a first past vehicle situation, static road features and operating conditions pertaining to the at least first past vehicle situation;
a **matching unit** (104) for ***identifying*** (1004) road segments (4) , e.g. of an ADS-compliant digital map, exhibiting road features to a predeterminable extent matching the static road features pertaining to the at least first past vehicle situation, said road segments (4) being located at geographical locations other than said crucial locations (3); and
a **mapping generating unit** (105) for ***generating*** (1005) a mapping (40) associating the identified road segments (4) located at geographical locations other than said crucial locations (3), with said operating conditions.

8. The locations mapping system (1) according to claim 7, wherein said mapping generating unit (105) is adapted for generating a heat map in which the identified road segments (4) are attributed with said operating conditions.

9. The locations mapping system (1) according to claim 7 or 8, further comprising:
a **map implementing unit** (106) for ***implementing*** (1006) said mapping (40) in a digital map (22) accessible from said vehicle (2).

10. The locations mapping system (1) according to any one of claims 7-9, further comprising:
a **conditions determining unit** (107) for ***determining*** (1007) current and/or expected quasi-static conditions - and potentially further dynamic conditions - pertaining to respective one or more of the road segments (4) of the mapping (40);
a **conditions comparing unit** (108) for ***comparing*** (1008) for said one or more road segments (4), respective road segment's (4) associated operating conditions with the corresponding determined current and/or expected conditions, and
a **blocking unit** (109) for ***blocking*** (1009) from the mapping (40), road segments associated with operating conditions to a predeterminable extent not complying with the corresponding determined current and/or expected conditions.

11. The locations mapping system (1) according to any one of claims 7-10, further comprising:
a **clustering unit** (103) for ***classifying*** (1003) road segments, e.g. of an ADS-compliant digital map, into a set of clusters, respective cluster comprising road segments exhibiting road features to a predeterminable extent being similar;
said matching unit (104) then being adapted for identifying a cluster, out of the set of clusters, comprising road segments exhibiting road features to a predeterminable extent matching the static road features pertaining to the at least first past vehicle situation, and said mapping generating unit (105) then being adapted for generating a mapping (40) associating the identified cluster with said operating conditions.

12. The locations mapping system (1) according to any one of claims 7-11, wherein said situations obtaining unit (101) is adapted for obtaining said data from:
accidentology data (301) indicative of past various geo-tagged critical and/or challenging vehicle situations and/or vehicle accidents; and/or
actual (302) and/or simulated (303) vehicle performance data indicative of past various geo-tagged key performance indicators, KPIs, identified as critical and/or challenging.

13. An **arrangement,** for instance an **offboard system** (112) and/or a **vehicle** (2), comprising a locations mapping system (1) according to any one of claims 7-12.

14. A computer program product comprising a computer program containing computer program code means arranged to cause a computer or a processor to execute the steps of a method according to any of claims 1-6, stored on a computer-readable medium or a carrier wave.

15. A non-volatile computer readable storage medium having stored thereon the computer program product of claim 14.

## Patentansprüche

1. Verfahren, durchgeführt von einem Ortsabbildungssystem (1) zum Unterstützen des Identifizierens von Orten, die für ein Fahrzeug (2), das mit einem automatisierten Fahrsystem, ADS (21), ausgerüstet ist, entscheidend sind, das Verfahren umfassend:
***Erhalten*** (1001) von Daten entscheidender Orte (3) vergangener Fahrzeugsituationen, die als kritisch und/oder herausfordernd identifiziert wurden;
***Extrahieren*** (1002) aus den Daten entscheidender Orte, für mindestens eine erste vergangene Fahrzeugsituation, von statischen Straßenmerkmalen und Betriebsbedingungen, die zu der mindestens ersten vergangenen Fahrzeugsituation gehören;
***Identifizieren*** (1004) von Straßensegmenten (4), z. B. einer ADS-konformen digitalen Karte, die Straßenmerkmale zeigen, die in einem vorbestimmbaren Ausmaß mit den statischen Straßenmerkmalen übereinstimmen, die zu der mindestens ersten vergangenen Fahrzeugsituation gehören, wobei sich die Straßensegmente (4) an anderen geografischen Orten als den entscheidenden Orten (3) befinden; und
***Erzeugen*** (1005) einer Abbildung (40), die die identifizierten Straßensegmente (4), die sich an anderen geographischen Orten als den entscheidenden Orten (3) befinden, mit den Betriebsbedingungen verknüpft.

2. Verfahren nach Anspruch 1, wobei das ***Erzeugen*** (1005) einer Abbildung (40) ein Erzeugen einer Wärmekarte umfasst, in der die identifizierten Straßensegmente (4) den Betriebsbedingungen zugeordnet sind.

3. Verfahren nach Anspruch 1 oder 2, weiter umfassend:
***Implementieren*** (1006) der Abbildung (40) in einer digitalen Karte (22), die von dem Fahrzeug (2) aus zugänglich ist.

4. Verfahren nach einem der Ansprüche 1-3, weiter umfassend:
***Bestimmen*** (1007) aktueller und/oder erwarteter quasistatischer Bedingungen - und möglicherweise weiterer dynamischer Bedingungen - die zu einem oder mehreren der Straßensegmente (4) der Abbildung (40) gehören;
***Vergleichen*** (1008) für das oder die mehreren Straßensegmente (4), entsprechender mit den Straßensegmenten (4) verknüpfter Betriebsbedingungen mit den entsprechenden bestimmten aktuellen und/oder erwarteten Bedingungen, und
***Blockieren*** (1009) von der Abbildung (40), von Straßensegmenten, die mit Betriebsbedingungen verknüpft sind, die in einem vorbestimmbaren Ausmaß nicht mit den entsprechenden bestimmten aktuellen und/oder erwarteten Bedingungen übereinstimmen.

5. Verfahren nach einem der Ansprüche 1-4, weiter umfassend:
***Klassifizieren*** (1003) von Straßensegmenten, z. B. einer ADS-konformen digitalen Karte, in einen Satz von Clustern, wobei der entsprechende Cluster Straßensegmente umfasst, die Straßenmerkmale aufweisen, die in einem vorbestimmbaren Ausmaß ähnlich sind;
wobei das ***Identifizieren*** (1004) von Straßensegmenten (4) dann ein Identifizieren eines Clusters aus dem Satz von Clustern umfasst, der Straßensegmente (4) umfasst, die Straßenmerkmale zeigen, die in einem vorbestimmbaren Ausmaß mit den statischen Straßenmerkmalen übereinstimmen, die zu der mindestens ersten vergangenen Fahrzeugsituation gehören, und wobei das ***Erzeugen*** (1005) einer Abbildung (40) dann das Erzeugen einer Abbildung (40) umfasst, die den identifizierten Cluster mit den Betriebsbedingungen verknüpft.

6. Verfahren nach einem der Ansprüche 1-5, das ***Erhalten*** (1001) von Daten entscheidender Orte (3), umfassend ein Erhalten der Daten von:
Unfallforschungsdaten (301), die verschiedene vergangene geogetaggte kritische und/oder herausfordernde Fahrzeugsituationen und/oder Fahrzeugunfälle angeben; und/oder
tatsächlichen (302) und/oder simulierten (303) Fahrzeugleistungsdaten, die verschiedene vergangene geogetaggte Schlüssel-Leistungsindikatoren (KPIs), die als kritisch und/oder herausfordernd identifiziert wurden, angeben.

7. **Ortsabbildungssystem** (1) zum Unterstützen des Identifizierens von Orten, die für ein Fahrzeug (2), das mit einem automatisierten Fahrsystem, ADS (21) ausgerüstet ist, entscheidend sind, das Ortsabbildungssystem (1) umfassend:
eine **Situationserfassungseinheit** (101) zum ***Erhalten*** (1001) von Daten entscheidender Orte (3) vergangener Fahrzeugsituationen, die als kritisch und/oder herausfordernd identifiziert wurden;
eine **Extraktionseinheit** (102) zum ***Extrahieren*** (1002) aus den Daten entscheidender Orte, für mindestens eine erste vergangene Fahrzeugsituation, von statischen Straßenmerkmalen und Betriebsbedingungen, die zu der mindestens ersten vergangenen Fahrzeugsituation gehören;
eine **Abgleichseinheit** (104) zum ***Identifizieren*** (1004) von Straßensegmenten (4), z. B. einer ADS-konformen digitalen Karte, die Straßenmerkmale zeigen, die in einem vorbestimmbaren Ausmaß mit den statischen Straßenmerkmalen übereinstimmen, die zu der mindestens ersten vergangenen Fahrzeugsituation gehören, wobei sich die Straßensegmente (4) an anderen geografischen Orten als den entscheidenden Orten (3) befinden; und
eine **Abbildungserzeugungseinheit** (105) zum ***Erzeugen*** (1005) einer Abbildung (40), die die identifizierten Straßensegmente (4), die sich an anderen geographischen Orten als den entscheidenden Orten (3) befinden, mit den Betriebsbedingungen verknüpft.

8. Ortsabbildungssystem (1) nach Anspruch 7, wobei die Abbildungserzeugungseinheit (105) angepasst ist zum Erzeugen einer Wärmekarte, in der die identifizierten Straßensegmente (4) den Betriebsbedingungen zugeordnet sind.

9. Ortsabbildungssystem (1) nach Anspruch 7 oder 8, weiter umfassend:
eine **Kartenimplementierungseinheit** (106) zum ***Implementieren** (1006)* der Abbildung (40) in einer digitalen Karte (22), die von dem Fahrzeug (2) aus zugänglich ist.

10. Ortsabbildungssystem (1) nach einem der Ansprüche 7-9, weiter umfassend:
eine **Zustandsbestimmungseinheit** (107) zum ***Bestimmen*** (1007) aktueller und/oder erwarteter quasistatischer Zustände - und möglicherweise weiterer dynamischer Zustände - die zu einem oder mehreren der Straßensegmente (4) der Abbildung (40) gehören;
eine **Bedingungsvergleichseinheit** (108) zum ***Vergleichen*** (1008) für das eine oder die mehreren Straßensegmente (4), entsprechender mit den Straßensegmenten (4) verknüpfter Betriebsbedingungen mit den entsprechenden bestimmten aktuellen und/oder erwarteten Bedingungen, und
eine **Blockiereinheit** (109) zum ***Blockieren*** (1009) von der Abbildung (40), von Straßensegmenten, die mit Betriebsbedingungen verknüpft sind, die in einem vorbestimmbaren Ausmaß nicht mit den entsprechenden bestimmten aktuellen und/oder erwarteten Bedingungen übereinstimmen.

11. Ortsabbildungssystem (1) nach einem der Ansprüche 7-10, weiter umfassend:
eine **Clustering-Einheit** (103) zum ***Klassifizieren*** (1003) von Straßensegmenten, z. B. einer ADS-konformen digitalen Karte, in einen Satz von Clustern, wobei der entsprechende Cluster Straßensegmente umfasst, die Straßenmerkmale aufweisen, die in einem vorbestimmbaren Ausmaß ähnlich sind;
wobei die Abgleichseinheit (104) dann angepasst ist, zum Identifizieren eines Clusters aus dem Satz von Clustern, der Straßensegmente umfasst, die Straßenmerkmale zeigen, die in einem vorbestimmbaren Ausmaß mit den statischen Straßenmerkmalen übereinstimmen, die zu der mindestens ersten vergangenen Fahrzeugsituation gehören, und wobei die Abbildungserzeugungseinheit (105) dann zum Erzeugen einer Abbildung (40) angepasst ist, die den identifizierten Cluster mit den Betriebsbedingungen verknüpft.

12. Ortsabbildungssystem (1) nach einem der Ansprüche 7-11, wobei die Situationserfassungseinheit (101) angepasst ist, zum Erhalten der Daten von:
Unfallforschungsdaten (301), die verschiedene vergangene geogetaggte kritische und/oder herausfordernde Fahrzeugsituationen und/oder Fahrzeugunfälle angeben; und/oder
tatsächlichen (302) und/oder simulierten (303) Fahrzeugleistungsdaten, die verschiedene vergangene geogetaggte Schlüssel-Leistungsindikatoren (KPIs), die als kritisch und/oder herausfordernd identifiziert wurden, angeben.

13. **Anordnung,** beispielsweise ein **Offboard-System** (112) und/oder ein **Fahrzeug** (2), umfassend ein Ortsabbildungssystem (1) nach einem der Ansprüche 7-12.

14. Computerprogrammprodukt, umfassend ein Computerprogramm, das Computerprogrammcodemittel enthält, die eingerichtet sind, um einen Computer oder einen Prozessor zu veranlassen, die Schritte eines Verfahrens nach einem der Ansprüche 1-6 auszuführen, die auf einem computerlesbaren Medium oder einer Trägerwelle gespeichert sind.

15. Nichtflüchtiges computerlesbares Speichermedium, das das darauf gespeicherte Computerprogrammprodukt nach Anspruch 14 aufweist.

## Revendications

1. Procédé mis en œuvre par un système (1) de mappage d'emplacements destiné à prendre en charge l'identification d'emplacements cruciaux pour un véhicule (2) équipé d'un système de conduite automatisée, ADS (21), ledit procédé comprenant :
***l'obtention*** (1001) de données d'emplacements cruciaux (3) de situations de véhicule antérieures identifiées comme critiques et/ou difficiles ;
***l'extraction*** (1002), des données d'emplacements cruciaux, pour au moins une première situation de véhicule antérieure, de caractéristiques de route statiques et de conditions de fonctionnement se rapportant à la au moins première situation de véhicule antérieure ;
***l'identification*** (1004) de segments de route (4), par exemple d'une carte numérique conforme au ADS, présentant des caractéristiques de route dans une mesure prédéterminable correspondant aux caractéristiques de route statiques se rapportant à la au moins première situation de véhicule antérieure, lesdits segments de route (4) étant situés au niveau d'emplacements géographiques autres que lesdits emplacements cruciaux (3) ; et
***la génération*** (1005) d'un mappage (40) associant les segments de route (4) identifiés situés à des emplacements géographiques autres que lesdits emplacements cruciaux (3), avec lesdites conditions de fonctionnement.

2. Procédé selon la revendication 1, dans lequel ladite ***génération*** (1005) d'un mappage (40) comprend la génération d'une carte thermique dans laquelle lesdites conditions de fonctionnement sont attribuées aux segments de route (4) identifiés.

3. Procédé selon la revendication 1 ou revendication 2, comprenant en outre :
***la mise en œuvre*** (1006) dudit mappage (40) dans une carte numérique (22) accessible depuis ledit véhicule (2).

4. Procédé selon l'une quelconque des revendications 1 à 3, comprenant en outre :
***la détermination*** (1007) de conditions quasi-statiques actuelles et/ou attendues - et éventuellement d'autres conditions dynamiques - se rapportant à un ou plusieurs segments respectifs des segments de route (4) du mappage (40) ;
***la comparaison*** (1008), pour lesdits un ou plusieurs segments de route (4), des conditions de fonctionnement associées du segment de route (4) respectif aux conditions actuelles et/ou attendues déterminées correspondantes, et
***le blocage*** (1009) depuis le mappage (40), de segments de route associés aux conditions de fonctionnement dans une mesure prédéterminable ne se conformant pas aux conditions actuelles et/ou attendues déterminées correspondantes.

5. Procédé selon l'une quelconque des revendications 1 à 4, comprenant en outre :
***le classement*** (1003) de segments de route, par exemple d'une carte numérique conforme au ADS, en un ensemble de groupes, un groupe respectif comprenant des segments de route présentant des caractéristiques de route dans une mesure prédéterminable qui est similaire ;
ladite ***identification*** (1004) de segments de route (4) comprenant ensuite l'identification d'un groupe, parmi l'ensemble de groupes, comprenant des segments de route (4) présentant des caractéristiques de route dans une mesure prédéterminable correspondant aux caractéristiques de route statiques se rapportant à la au moins première situation de véhicule antérieure, et ladite ***génération*** (1005) d'un mappage (40) comprenant ensuite la génération d'un mappage (40) associant le groupe identifié auxdites conditions de fonctionnement.

6. Procédé selon l'une quelconque des revendications 1 à 5, dans lequel ladite ***obtention*** (1001) de données d'emplacements cruciaux (3), comprend l'obtention desdites données à partir :
de données d'accidentologie (301) indicatives de divers accidents de véhicule et/ou de situations de véhicule critiques et/ou difficiles géolocalisés antérieurs ; et/ou
de données de performances de véhicule actuelles (302) et/ou simulées (303) indicatives de divers indicateurs de performances clés, KPI, géolocalisés antérieurs identifiés comme critiques et/ou difficiles.

7. **Système (1) de mappage d'emplacements** destiné à prendre en charge l'identification d'emplacements cruciaux pour un véhicule (2) équipé d'un système de conduite automatisée, ADS (21), ledit système de mappage d'emplacements (1) comprenant :
une **unité (101) d'obtention de situations** destinée à ***obtenir*** (1001) des données d'emplacements cruciaux (3) de situations de véhicule antérieures identifiées comme critiques et/ou difficiles ;
une **unité (102) d'extraction** destinée à ***extraire*** (1002), des données d'emplacements cruciaux, pour au moins une première situation de véhicule antérieure, des caractéristiques de route statiques et des conditions de fonctionnement se rapportant à la au moins première situation de véhicule antérieure ;
une **unité (104) de mise en correspondance** destinée à ***identifier** (1004)* des segments de route (4), par exemple d'une carte numérique conforme au ADS, présentant des caractéristiques de route dans une mesure prédéterminable correspondant aux caractéristiques de route statiques se rapportant à la au moins première situation de véhicule antérieure, lesdits segments de route (4) étant situés au niveau d'emplacements géographiques autres que lesdits emplacements cruciaux (3) ; et
une **unité (105) de génération de mappage** destinée à ***générer*** (1005) un mappage (40) associant les segments de route (4) identifiés situés à des emplacements géographiques autres que lesdits emplacements cruciaux (3), avec lesdites conditions de fonctionnement.

8. Système (1) de mappage d'emplacements selon la revendication 7, dans lequel ladite unité (105) de génération de mappage est adaptée pour générer une carte thermique dans laquelle lesdites conditions de fonctionnement sont attribuées aux segments de route (4) identifiés.

9. Système (1) de mappage d'emplacements selon la revendication 7 ou revendication 8, comprenant en outre :
une **unité (106) de mise en œuvre de carte** destinée à ***mettre en œuvre*** (1006) ledit mappage (40) dans une carte numérique (22) accessible depuis ledit véhicule (2).

10. Système (1) de mappage d'emplacements selon l'une quelconque des revendications 7 à 9, comprenant en outre :
une **unité (107) de détermination de conditions** destinée à ***déterminer*** (1007) des conditions quasi-statiques actuelles et/ou attendues - et éventuellement d'autres conditions dynamiques - se rapportant à un ou plusieurs segments respectifs des segments de route (4) du mappage (40) ;
une **unité (108) de comparaison de conditions** destinée à ***comparer*** (1008), pour lesdits un ou plusieurs segments de route (4), des conditions de fonctionnement associées du segment de route (4) respectif aux conditions actuelles et/ou attendues déterminées correspondantes, et
une **unité (109) de blocage** destinée à ***bloquer*** (1009) depuis le mappage (40), des segments de route associés aux conditions de fonctionnement dans une mesure prédéterminable ne se conformant pas aux conditions actuelles et/ou attendues déterminées correspondantes.

11. Système (1) de mappage d'emplacements selon l'une quelconque des revendications 7 à 10, comprenant en outre :
une **unité (103) de groupement** destinée à ***classer*** (1003) des segments de route, par exemple d'une carte numérique conforme au ADS, en un ensemble de groupes, un groupe respectif comprenant des segments de route présentant des caractéristiques de route dans une mesure prédéterminable qui est similaire ;
ladite unité (104) de mise en correspondance étant ensuite adapter pour identifier un groupe, parmi l'ensemble de groupes, comprenant des segments de route présentant des caractéristiques de route dans une mesure prédéterminable correspondant aux caractéristiques de route statiques se rapportant à la au moins première situation de véhicule antérieure, et ladite unité (105) de génération de mappage étant ensuite adaptée pour générer un mappage (40) associant le groupe identifié auxdites conditions de fonctionnement.

12. Système (1) de mappage d'emplacements selon l'une quelconque des revendications 7 à 11, dans lequel ladite unité (101) d'obtention de situations est adaptée pour obtenir lesdites données à partir de :
données d'accidentologie (301) indicatives de divers accidents de véhicule et/ou de situations de véhicule critiques et/ou difficiles géolocalisés antérieurs ; et/ou
données de performances de véhicule actuelles (302) et/ou simulées (303) indicatives de divers indicateurs de performances clés, KPI, géolocalisés antérieurs identifiés comme critiques et/ou difficiles.

13. **Agencement,** par exemple **système non embarqué** (112) et/ou **véhicule** (2), comprenant un système (1) de mappage d'emplacements selon l'une quelconque des revendications 7 à 12.

14. Produit-programme informatique comprenant un programme informatique contenant un moyen de code de programme informatique conçu pour amener un ordinateur ou un processeur à mettre en œuvre les étapes d'un procédé selon l'une quelconque des revendications 1 à 6, stocké sur un support lisible par ordinateur ou une onde porteuse.

15. Support de stockage non volatil lisible par ordinateur sur lequel est stocké le produit-programme informatique selon la revendication 14.
